# EUROPEAN PATENT SPECIFICATION

(11) **EP 1 536 653 B1**
(45) Date of publication and mention of the grant of the patent: **30.07.2008**
(21) Application number: 04028112.3
(22) Date of filing: 26.11.2004
(51) Int. Cl.: H04Q 7/32, H04Q 7/34

(54) **Apparatus and method for displaying data rates in a wireless terminal**
Gerät und Verfahren zum Anzeigen der Datenrate in einem drahtlosen Endgerät
Dispositif et méthode pour afficher les taux de transmission de données dans un terminal sans fil

(30) Priority: 29.11.2003 KR 2003085977
(43) Date of publication of application: 01.06.2005
(73) Proprietor: SAMSUNG ELECTRONICS CO., LTD., Suwon-si, Gyeonggi-do (KR)
(72) Inventor: Yang, Jae-Duk, Yeongtong-gu Suwon-si Gyeonggi-do (KR)
(74) Representative: Lang, Johannes

(56) References cited:
- EP-A- 1 173 035
- WO-A-01/24418
- US-A1- 2002 097 697
- US-A1- 2003 125 092

## Description

### BACKGROUND OF THE INVENTION

### Field of the Invention

The present invention relates to an apparatus and method for displaying a data rate in a wireless terminal. More particularly, the present invention relates to an apparatus and method for displaying a data communication rate after measuring the data communication rate when a wireless terminal is in a waiting mode.

### Description of the Related Art

A conventional wireless terminal shows a signal strength bar having an antenna shape in a display module in order to display a receiving sensitivity or signal strength. Accordingly, a user utilizing the wireless terminal sees a current receiving sensitivity of the wireless terminal and determines whether or not the wireless terminal is in a coverage area on the basis of the receiving sensitivity, which is convenient for the user. Also, in a waiting mode, the wireless terminal detects a transmission frequency and power through a monitoring channel in order to detect the transmission power of a present base station within a cell in which the wireless terminal is currently located. Also, the wireless terminal displays an intensity level of the detected transmission power as a shape of an antenna bar on a screen thereof. The base station allows the wireless terminal to monitor the transmission power of the base station at a proper time according to a predetermined period of time called a "paging time". However, as data communication has developed, in a Code Division Multiple Access (CDMA) method and a General Packet Radio Service (GPRS) method or an Enhanced Data rates for GSM Evolution (EDGE) method, which has been widely used for the wireless terminal in Europe, a current data transmission rate is not displayed even if data communication is performed. In particular, when a user performs data communication in a waiting mode, a user does not know the data connection rate.

The US patent application US 2003/0125092 A1 titled with *"Data transfer rate display selection",* which is published on July 3, 2003, discloses a device for displaying data transfer rates on a display. The device includes a system for displaying the transfer rates in an alphanumeric mode or an alternative graphic mode; and a system for switching between displaying the transfer rates in the alphanumeric mode and the graphics mode.

The Patent application WO 01/24418 A1 titled with *"Estimating an indicator for a communication path",* which is published on April 5, 2001, discloses an invention relating to estimation of a network indicator of a communication path between a first station and a second station in a communication system. A first indicator of the communication path in a direction from the first station to the second station is determined at the second station. A second station indicator of the communication path in a direction from the second station to the first station is determined at the first station. Said second indicator associates to a corresponding feature of the communication path than said first indicator. A third indicator of the communication path in the direction from the first station to the second station is determined at the second station. The network indicator of the communication path in the direction from the second station to the first station is then estimated based on the determined first, second and third indicators.

### SUMMARY OF THE INVENTION

Accordingly, the present invention has been made to solve the above-mentioned problems occurring in the prior art and to achieve other advantages. An object of the present invention is to provide an apparatus and method for displaying a transmission data rate and a reception data rate on a wireless terminal by measuring the transmission data rate and the reception data rate by transmitting and receiving signals at a predetermined time while in a waiting mode of the wireless terminal.

In order to accomplish this object, an apparatus and method for displaying a data rate of a wireless terminal are provided. The apparatus and method comprise transferring a first data frame for measuring a transmission data rate of the wireless terminal to a base station; storing information on the transmission data rate measured at the base station in a second data frame; receiving the second data frame for measuring a reception data rate of the wireless terminal from the base station; and displaying the transmission data rate and the reception data rate of the wireless terminal.

In order to accomplish this object, an apparatus and method for displaying a data rate of a wireless terminal are provided. The apparatus and method comprise checking whether or not a predetermined time elapses when the wireless terminal is in a waiting mode; transferring a first data frame for measuring a transmission data rate of the wireless terminal to a base station if the predetermined time elapses; measuring the transmission data rate of the wireless terminal by means of the first data frame when receiving the first data frame at the base station; measuring the reception data rate of the wireless terminal by means of the second data frame when receiving the second data frame at the wireless terminal;

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a structure of a wireless terminal according to an embodiment of the present invention;
FIG. 2 is a flow chart illustrating a method for displaying a data rate after measuring the data rate in a wireless terminal according to an embodiment of the present invention;
FIG. 3 is a diagram illustrating a procedure of transmitting and receiving data rate information between a wireless terminal and a base station according to an embodiment of the present invention;
FIG. 4A is a diagram illustrating a first data frame transferred from a wireless terminal to a base station of FIG. 3; and
FIG. 4B is a diagram illustrating a second data frame transferred from the base station to the wireless terminal of FIG.3.

In the drawings, it should be understood that the same reference numerals are used throughout the drawings.

### DETAILED DESCRIPTION OF THE PREFERRED EMBODIMENT

An embodiment of the present invention will be described in detail with reference to the accompanying drawings. In the following description of the present invention, a detailed description of known functions and configurations incorporated herein will be omitted for conciseness.

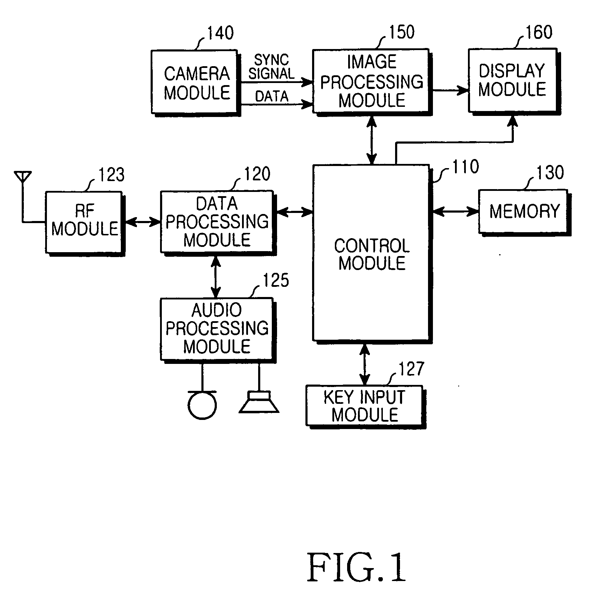

FIG. 1 is a diagram illustrating a structure of a wireless terminal according to an embodiment of the present invention in which the wireless terminal has a camera.

Referring to FIG. 1, an RF module 123 performs wireless communication functions. The RF module 123 includes an RF transmitter (not shown), which amplifies and up-converts frequencies of transmitted signals, and an RF receiver (not shown), which low-noise amplifies and down-converts transmitted signals. A data processing module 120 includes a transmitter (not shown), which encodes and modulates the transmitted signals, and a receiver (not shown), which decodes and demodulates the received signals. The data processing module 120 may include a MODEM and a CODEC. Herein, the CODEC includes a data CODEC processing packet data, and an audio CODEC processing audio signals such as voices. An audio processing module 125 replays reception audio signals output from the audio CODEC of the data processing module 120 or transfers transmission audio signals generated from a microphone to the audio CODEC of the data processing module 120.

A memory 130 may include a program memory or a data memory. The program memory may have programs for controlling general functions of a wireless terminal and programs for controlling the wireless terminal in such a manner that a data rate of the wireless terminal is measured by means of a predetermined signal transmitted or received when the wireless terminal is in a waiting mode according to an embodiment of the present invention and displayed. Also, the data memory temporarily has data generated while executing the programs.

A control module 110 controls entire operations of the wireless terminal. Also, the control module 110 may include the data processing module 120. Furthermore, the control module 110 controls the wireless terminal in such a manner that the wireless terminal transmits a first data frame for measuring a transmission data rate thereof to a base station by a predetermined period of time in a waiting mode and measures a data rate thereof by means of a second data frame for measuring a reception data rate of the wireless terminal received from the base station so as to display the reception data rate according to an embodiment of the present invention.

A camera module 140 photographs image data. Furthermore, the camera module 140 includes a camera sensor for converting photographed light signals into electric signals and a signal processing part for converting analog image signals photographed from the camera sensor into digital data. Herein, the camera sensor may be a Charge Coupled Device (CCD) sensor, and the signal processing part can be realized by means of a digital signal processor (DSP). Also, the camera sensor can be integrally formed with the signal processing part, or separately formed from each other.

An image processing module 150 generates display data for displaying image signals output from the camera module 140. The image processing module 150 processes image data output from the camera module 140 in a frame unit and outputs frame image data according to characteristics and the size of a display module 160. Also, the image processing module 150 includes an image CODEC so as to compress the frame image data displayed on the display module 160 by means of an established method, or uncompress the compressed frame image data into original frame image data. Herein, the image CODEC may be a Joint Photographic Experts Group (JPEG) CODEC, a Moving Picture Experts Group 4 (MPEG4) CODEC, a Wavelet CODEC, or any other suitable CODEC. On the assumption that the image processing module 150 has an on screen display (OSD) function, the image process module 150 may output OSD data according to the size of a screen displayed under the control of the control module 110.

The display module 160 displays image signals output from the image processing module 150 through a screen and user data output from the control part 110. Herein, the display module 160 may employ a Liquid Crystal Display (LCD). If the LCD is employed, the display module 160 may include a LCD controller module, a memory used for storing image data, and a LCD display element. Herein, if the LCD is realized in a touch screen, the display module 160 may be operated as an input module. In addition, the display module 160 displays a data rate of the wireless terminal measured by a predetermined period of time according to an embodiment of the present invention. Herein, the data rate can be variously displayed in a shape of an antenna or a bar, numerals, and so on.

A key input module 127 includes keys used for inputting numerals and letters and function keys used for setting various functions.

Hereinafter, an operation of the wireless terminal measuring a data rate and displaying a measured data rate will now be described. The control module 110 transfers the first data frame used for measuring a transmission data rate of the wireless terminal to the base station when the wireless terminal is in a waiting mode. The base station, which has received the first data frame, measures the transmission data rate of the wireless terminal by means of the first data frame. The base station stores the measured transmission data rate of the wireless terminal in the second data frame used for measuring a reception data rate of the wireless terminal so as to transfer the second data frame to the wireless terminal. The control module 110, detects reception of the second data frame, measures the reception data rate of the wireless terminal by means of the second data frame, detects the transmission data rate of the wireless terminal from corresponding measured transmission data rate information included in the second data frame and displays the transmission data rate and the reception data rate on the display module 160.

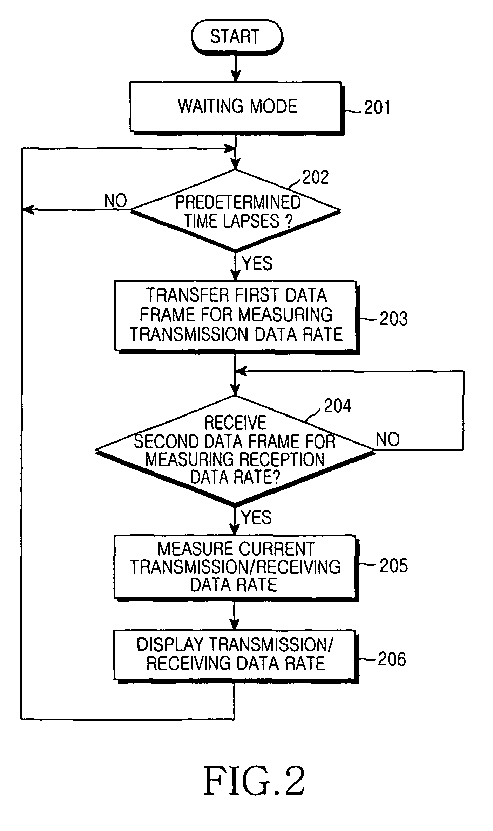

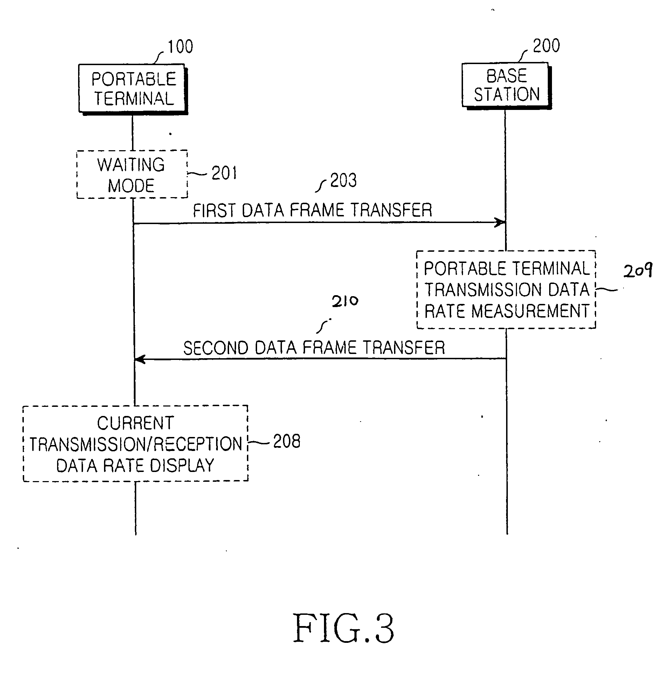

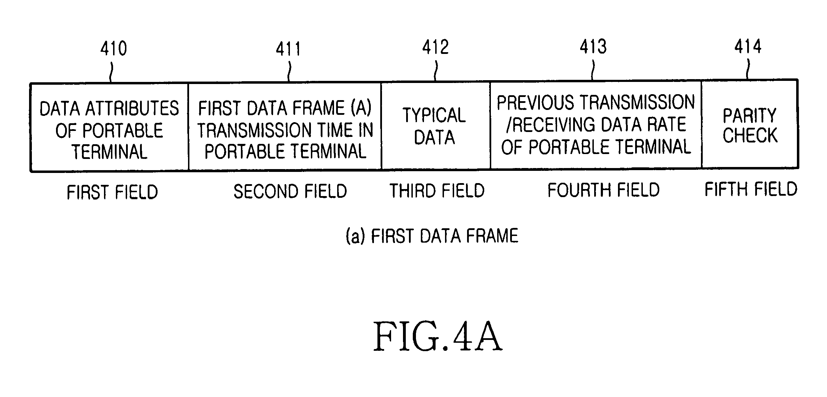

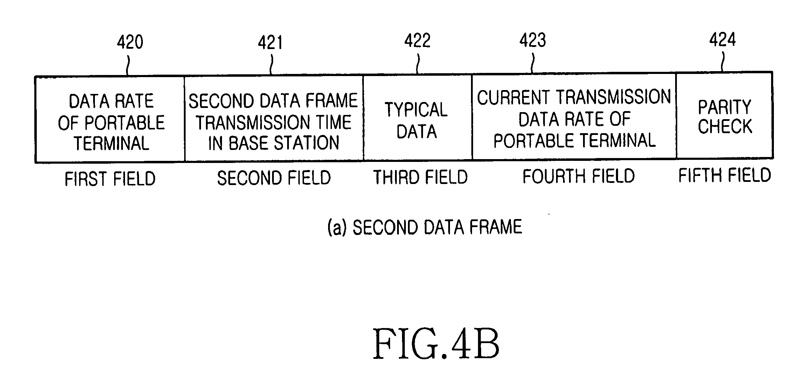

FIG. 2 is a flow chart illustrating a method for measuring and displaying a data rate in a wireless terminal according to an embodiment of the present invention, and FIG. 3 is a diagram illustrating a procedure for transmitting and receiving data rate information between a wireless terminal and a base station according to an embodiment of the present invention. FIG. 4A is a diagram illustrating the first data frame transferred from the wireless terminal to the base station of FIG. 3, and FIG. 4B is a diagram illustrating the second data frame transferred from the base station to the wireless terminal of FIG. 3.

Hereinafter, an embodiment of the present invention will now be described in detail with reference to FIGs 1 to 4B.

If a predetermined period of time elapses in step 201 representing a waiting mode, the control module 110 detects that a predetermined period of time has elapsed in step 202. Thereafter, the control module 110 transfers the first data frame used for measuring a transmission data rate of the wireless terminal to the base station 200. Herein, the first data frame transferred to the base station 200 will be described in detail with reference to FIG. 4A. Referring to FIG. 4A, the first data frame (a) includes a first field 410 having attribute information of data transmitted from the wireless terminal, a second field 411 having information regarding a transmission start time for the first data frame (a) from the wireless terminal 100 to the base station 200, a third field 412 having typical data assigned between the wireless terminal and the base station, a fourth field 413 having transmission and reception information of previous data of the wireless terminal, and a fifth field 414 having a parity used for checking whether or not a loss of data transferred from the wireless terminal exists. The first field 410 determines data attributes sent from the wireless terminal. In case of a wireless terminal employing an Enhanced Data rates for GSM Evolution (EDGE)/General Packet Radio Service (GPRS) method, the data attributes are represented as three attributes, which are a mode (EDGE/GPRS), a class (1-12), and a code scheme (MCS1-9/CS1-4). For example, the first field 410 may have data attributes that the mode, the class, and the code scheme correspond to "EDGE", "8", and "MCS 9", respectively. The second field 411 is information of time when the wireless terminal transmits the first data frame. Herein, the wireless terminal can measure an uploading data rate on the basis of information of the time. The third field 412 has data assigned between the wireless terminal 100 and the base station 200. Herein, the base station 200 receives the data stored in the third field 412 so as to analyze the data and measures the uploading data rate on the basis of the amount of data received in each predetermined period of time. The fourth field 413 is used when a network finds a data rate of the wireless terminal located in a coverage area of the base station 200. Furthermore, the fourth field 413 is used when a data rate previously displayed to a user of the wireless terminal is delivered to the base station 200 so that the base station 200 finds the current data rate of the network.

The base station 200 receiving the first data frame (a) shown in FIG. 4A measures the amount of data of the third field 412, which has been received in the base station 200 for a predetermined time from the transmission time of the first data frame obtained through the second field 411 of the first data frame to a receiving time of the first data frame in the base station 200, thereby measuring the transmission data rate of the wireless terminal through step 209 shown in FIG. 3. Thereafter, step 210 shown in FIG. 3 is performed, in which the base station 200 transfers the second data frame having a measured transmission data rate of the wireless terminal to the wireless terminal 100. Hereinafter, the second data frame transmitted to the wireless terminal 100 will be described with reference to FIG. 4B. Referring to FIG. 4B, the second data frame (b) includes a first field 420 having attribute information of data sent from the wireless terminal, a second field 421 having information regarding a start time for transmitting the second data frame (B) from the base station 200 to the wireless terminal 100, the third field 422 having typical data assigned between the wireless terminal and the base station, a fourth field 423 having the transmission and reception data information of the wireless terminal measured in step 205, and a fifth field 424 having a parity for checking whether or not a loss of data transferred from the wireless terminal exists. The first field 420 is identical to the first field 410 of the first data frame (a) and is stored in the second data frame (b) in order to report network conditions varying in real time in a network so as to be transferred. The second field 421 is information of time when the base station 200 transmits the second data frame (b). Herein, the wireless terminal 100 can measure a downloading data rate on the basis of information of the time. The third field 422 has data assigned between the wireless terminal 100 and the base station 200. Herein, the wireless terminal receives the data stored in the third field 422 so as to analyze the data and measures a downloading data rate on the basis of the amount of data received in each predetermined period of time. The fourth field 423 represents the transmission data rate of the wireless terminal measured by the base station 200 through the first data frame (a). The fifth field 424 is used for secure recovery of the whole data transmitted from the base station 200.

When the second data frame (b) shown in FIG. 4B is received, the control module 110 of the wireless terminal perceives reception of the second data frame (b) in step 204 and performs step 205 for measuring the transmission and reception data rate of the wireless terminal. In step 205, the control module 110 calculates the amount of data of the third field 422 received for a predetermined time from the transmission time of the second data frame obtained through the second field 421 of the second data frame to a receiving time of the second data frame in the wireless terminal 100, thereby measuring the reception data rate of the wireless terminal. Also, the control module 110 detects the transmission data rate of the wireless terminal through the fourth field 423 of the second data frame. Thereafter, the control module 110 performs step 206 for displaying the measured transmission and reception data rate of the wireless terminal on the display module 160. Herein, the display module 160 can variously display the measured transmission and reception data rate of the wireless terminal in a shape of an antenna or a bar, numerals, and so on. Also, the display module 160 can display the potential for data transmission, and a data rate when transmitting data, to notify a user of the data transmission potential and the data rate. After displaying the data rate of the wireless terminal on the display module 160, the control module 100 determines whether or not a predetermined period of time elapses. If the predetermined time elapses, after the control module 100 becomes aware that the predetermined time elapses in step 202, the control module 100 repeatedly performs steps 203 to 206.

The wireless terminal 100 confirms a connection between the wireless terminal 100 and the base station 200 through a paging channel when the wireless terminal is in a waiting mode of step 201. Also, the wireless terminal 100 provides the first data frame to the base station 200 and receives the second data frame from the base station 200 by a predetermined period of time, so that it is possible to confirm a data rate of the wireless terminal. Accordingly, a wireless terminal employing an EDGE/GPRS method, and so on, employs currently used Random Access Channel (RACH) and Access Grant Channel (AGCH) channels, and the RACH and the AGCH channels are allotted to the first and the second data frames, respectively, so that it is possible to transmit and receive the first and the second data frames by a predetermined period of time. Also, data according to an embodiment of the present invention are added to existing data of established channels so that the data are transmitted and received. Also, the first and the second data frames can be provided by allotting new channels.

In a network, the wireless terminal employing the EDGE/GPRS method sends individual data of the wireless terminal to the base station by means of the RACH channel. Thereafter, the wireless terminal confirms that the wireless terminal has been connected with the base station during a paging time interval by means of the AGCH channel sent from the base station. Herein, according to an embodiment of the present invention, an additional new data rate confirmation channel is allotted. If the first and the second data frames are transmitted or received through the additional new data rate confirmation channel, the data rate confirmation channel is operated for a longer time period than the paging time.

Therefore, according to an embodiment of the present invention, a data rate is measured and displayed in a waiting mode of the wireless terminal, so that a user utilizing the wireless terminal can easily find uploading and downloading data rates of the wireless terminal located in a base station coverage area. Also, the user can find using the display module whether or not the current wireless terminal can transfer data and a data rate when transferring data, so that the user can solve problems with incompatible data rates. In particular, in high rate data communication employing the EDGE method, it is possible for the wireless terminal to have a high-speed data rate.

## Claims

1. A method for displaying a data rate of a wireless terminal, the method comprising the steps of:
transferring a first data frame for measuring a transmission data rate of the wireless terminal to a base station (203);
storing information on the transmission data rate measured at the base station in a second data frame (209);
receiving the second data frame for measuring a reception data rate of the wireless terminal from the base station (210); and
displaying the transmission data rate and the reception data rate of the wireless terminal (208).

2. The method as claimed in claim 1, wherein the first data frame includes a first field (410) having attribute information of data transferred by the wireless terminal, a second field (411) having time information at which the wireless terminal transmits the first data frame, a third field (412) having typical data assigned between the wireless terminal and the base station, a fourth field (413) having information of previous transmission and reception data rates of the wireless terminal, and a fifth field (414) having a parity for determining whether or not a loss of data transferred from the wireless terminal exists.

3. The method as claimed in claim 1, wherein the second data frame includes a first field (420) having attribute information of data transferred from the wireless terminal, a second field (421) having time information at which the base station transmits the second data frame, a third field (422) having typical data assigned between the wireless terminal and the base station, a fourth field (423) having information of a transmission data rate of the wireless terminal measured by the base station, and a fifth field (424) having a parity for determining whether or not a loss of data transferred from the wireless terminal exists.

4. The method as claimed in claim 1, the method comprising further the steps of:
determining whether or not a predetermined time elapses when the wireless terminal is in a waiting mode (202);
transferring the first data frame for measuring a transmission data rate of the wireless terminal to a base station if the predetermined time elapses (203);
measuring the transmission data rate of the wireless terminal by means of the first data frame when receiving the first data frame at the base station (209);
measuring the reception data rate of the wireless terminal by means of the second data frame (205) when receiving the second data frame at the wireless terminal (204).

5. The method as claimed in claim 4, wherein the base station measures the transmission data rate of the wireless terminal based on time information representing a transmission time of the first data frame from the wireless terminal and typical data assigned between the wireless terminal and the base station, which are stored in the first data frame.

6. The method as claimed in claim 4, wherein the wireless terminal measures the reception data rate of the wireless terminal by means of typical data assigned between the wireless terminal and the base station, and time information representing a transmission time of the second data frame from the base station, which are stored in the second data frame.

7. An apparatus for displaying a data rate of a wireless terminal, the apparatus comprises:
a radio frequency module (123) adapted to receive and transmit radio frequency signals;
a data processing module (120) adapted to modulate and demodulate signals;
a memory (130) adapted to store programs for performing wireless functions of the wireless terminal;
a display module (160) adapted to display signal strength, transmission data rate information and reception data rate information of the wireless terminal;
a controller (110) adapted to transfer a first data frame for measuring a transmission data rate of the wireless terminal to a base station, receive a second data frame for measuring a reception data rate of the wireless terminal including information on the transmission data rate measured at the base station from the base station, and display the transmission data rate and the reception data rate of the wireless terminal on the display module (160).

8. The apparatus as claimed in claim 7, wherein the first data frame includes a first field (410) having attribute information of data transferred by the wireless terminal, a second field (411) having time information at which the wireless terminal transmits the first data frame, a third field (412) having typical data assigned between the wireless terminal and the base station, a fourth field (413) having information of previous transmission and reception data rates of the wireless terminal, and a fifth field (414) having a parity for determining whether or not a loss of data transferred from the wireless terminal exists.

9. The apparatus as claimed in claim 7, wherein the second data frame includes a first field (420) having attribute information of data transferred from the wireless terminal, a second field (421) having time information at which the base station transmits the second data frame, a third field (422) having typical data assigned between the wireless terminal and the base station, a fourth field (423) having information of a transmission data rate of the wireless terminal measured by the base station, and a fifth field (424) having a parity for determining whether or not a loss of data transferred from the wireless terminal exists.

10. The apparatus as claimed in claim 7, wherein the controller (110) is further adapted to determine whether or not a predetermined time elapses when the wireless terminal is in a waiting mode, transfer a first data frame for measuring a transmission data rate of the wireless terminal to a base station if the predetermined time elapses, measure the reception data rate of the wireless terminal by means of the second data frame when receiving the second data frame at the wireless terminal, and display a measured reception data rate of the wireless terminal and the transmission data rate of the wireless terminal measured at the base station and stored in the second data frame through the displaying module (160).

11. The apparatus as claimed in claim 10, wherein the base station is adapted to measure the transmission data rate of the wireless terminal based on time information representing a transmission time of the first data frame from the wireless terminal and typical data assigned between the wireless terminal and the base station, which are stored in the first data frame.

12. The apparatus as claimed in claim 10, wherein the wireless terminal is adapted to measure the reception data rate of the wireless terminal by means of typical data assigned between the wireless terminal and the base station, and time information representing a transmission time of the second data frame from the base station, which are stored in the second data frame.

## Patentansprüche

1. Verfahren zum Anzeigen einer Datenrate eines drahtlosen Endgerätes, wobei das Verfahren folgende Schritte aufweist:
Übermitteln eines ersten Datenrahmens zum Messen einer Übertragungsdatenrate des drahtlosen Endgerätes zu einer Basisstation (203);
Speichern von Information über die Übertragungsdatenrate, die an der Basisstation gemessen wird, in einem zweiten Datenrahmen (209);
Empfangen des zweiten Datenrahmens zum Messen einer Empfangsdatenrate des drahtlosen Endgerätes von der Basisstation (210); und
Anzeigen der Übertragungsdatenrate und der Empfangsdatenrate des drahtlosen Endgerätes (208).

2. Verfahren nach Anspruch 1, wobei der erste Datenrahmen ein erstes Feld (410) enthält, das Eigenschaftsinformation von Daten aufweist, die von dem drahtlosen Endgerät übermittelt werden, ein zweites Feld (411), das Zeitinformation, zu welcher das drahtlose Endgerät den ersten Datenrahmen überträgt, aufweist, ein drittes Feld (412), das typische Daten aufweist, die zwischen dem drahtlosen Endgerät und der Basisstation zugewiesen werden, ein viertes Feld (413), das Information von vorhergehenden Übertragungs- und Empfangsdatenraten des drahtlosen Endgerätes aufweist, und ein fünftes Feld (414), das eine Parität zum Bestimmen, ob ein Verlust an Daten, die von dem drahtlosen Endgerät übertragen werden, besteht oder nicht, aufweist.

3. Verfahren nach Anspruch 1, wobei der zweite Datenrahmen ein erstes Feld (420) beinhaltet, das Eigenschaftsinformation von Daten, die von dem drahtlosen Endgerät übermittelt werden, aufweist, ein zweites Feld (421) das Zeitinformation aufweist, zu welcher die Basisstation den zweiten Datenrahmen überträgt, ein drittes Feld (422), das typische Daten, die zwischen dem drahtlosen Endgerät und der Basisstation zugewiesen werden, aufweist, ein viertes Feld (423), das Information über eine Übertragungsdatenrate des drahtlosen Endgerätes, die von der Basisstation gemessen wird, aufweist, und ein fünftes Feld (424) das eine Parität zum Bestimmen, ob ein Verlust an Daten, die von dem drahtlosen Endgerät übermittelt werden, besteht oder nicht, aufweist.

4. Verfahren nach Anspruch 1, wobei das Verfahren weiter folgende Schritte aufweist:
Bestimmen ob eine vorbestimmte Zeit abläuft oder nicht, wenn das drahtlose Endgerät in einem Wartemodus ist (202);
Übermitteln des ersten Datenrahmens zum Messen einer Übertragungsdatenrate des drahtlosen Endgerätes zu einer Basisstation, wenn die vorbestimmte Zeit abläuft (203);
Messen der Übertragungsdatenrate des drahtlosen Endgeräts mittels des ersten Datenrahmens, wenn der erste Datenrahmen an der Basisstation empfangen wird (209);
Messen der Empfangsdatenrate des drahtlosen Endgerätes mittels des zweiten Datenrahmens (205), wenn der zweite Datenrahmen an dem drahtlosen Endgerät empfangen wird (204).

5. Verfahren nach Anspruch 4, wobei die Basisstation die Übertragungsdatenrate des drahtlosen Endgerätes basierend auf Zeitinformation, die eine Übertragungszeit des ersten Datenrahmens von dem drahtlosen Endgerät repräsentiert, und typischen Daten, die zwischen dem drahtlosen Endgerät und der Basisstation zugewiesen sind, die in dem ersten Datenrahmen gespeichert sind, misst.

6. Verfahren nach Anspruch 4, wobei das drahtlose Endgerät die Empfangsdatenrate des drahtlosen Endgerätes mittels typischer Daten, die zwischen dem drahtlosen Endgerät und der Basisstation zugewiesen werden, und Zeitinformation, die eine Übertragungszeit des zweiten Datenrahmens von der Basisstation, die in dem zweiten Datenrahmen gespeichert sind, misst.

7. Vorrichtung zum Anzeigen einer Datenrate eines drahtlosen Endgerät, wobei die Vorrichtung aufweist:
ein Funkfrequenzmodul (123), das eingerichtet ist, Funkfrequenzsignale zu empfangen und übertragen;
ein Datenverarbeitungsmodul (120), das eingerichtet ist, Signale zu modulieren und zu demodulieren;
ein Speicher (130), der eingerichtet ist, Programme zum Ausführen drahtloser Funktionen des drahtlosen Endgerätes zu speichern;
ein Anzeigenmodul (160), das eingerichtet ist, Signalstärke, Übertragungsdatenrateinformation und Empfangsdatenrateinformation des drahtlosen Endgerätes anzuzeigen;
eine Steuereinrichtung (110), die eingerichtet ist, einen ersten Datenrahmen zum Messen einer Übertragungsdatenrate des drahtlosen Endgerätes zu einer Basisstation zu übermitteln, einen zweiten Datenrahmen zum Messen einer Empfangsdatenrate des drahtlosen Endgerätes, der Information über die Übertragungsdatenrate beinhaltet, die an der Basisstation gemessen wird, von der Basisstation zu empfangen und die Übertragungsdatenrate und die Empfangsdatenrate des drahtlosen Endgerätes auf dem Anzeigenmodul (160) anzuzeigen.

8. Vorrichtung nach Anspruch 7, wobei wobei der erste Datenrahmen ein erstes Feld (410) enthält, das Eigenschaftsinformation von Daten aufweist, die von dem drahtlosen Endgerät übermittelt werden, ein zweites Feld (411), das Zeitinformation zu welcher das drahtlose Endgerät den ersten Datenrahmen überträgt aufweist, ein drittes Feld (412), das typische Daten aufweist, die zwischen dem drahtlosen Endgerät und der Basisstation zugewiesen werden, ein viertes Feld (413), das Information von vorhergehenden Übertragungs- und Empfangsdatenraten des drahtlosen Endgerätes aufweist, und ein fünftes Feld (414), das eine Parität zum Bestimmen, ob ein Verlust an Daten, die von dem drahtlosen Endgerät übertragen werden, besteht oder nicht, aufweist.

9. Vorrichtung nach Anspruch 7, wobei der zweite Datenrahmen ein erstes Feld (420) beinhaltet, das Eigenschaftsinformation von Daten, die von dem drahtlosen Endgerät übermittelt werden, aufweist, ein zweites Feld (421) das Zeitinformation aufweist, zu welcher die Basisstation den zweiten Datenrahmen überträgt, ein drittes Feld (422), das typische Daten, die zwischen dem drahtlosen Endgerät und der Basisstation zugewiesen werden, aufweist, ein viertes Feld (423), das Information über eine Übertragungsdatenrate des drahtlosen Endgerätes, die von der Basisstation gemessen wird, aufweist, und ein fünftes Feld (424) das eine Parität zum Bestimmen, ob ein Verlust an Daten, die von dem drahtlosen Endgerät übermittelt werden, besteht oder nicht, aufweist.

10. Vorrichtung nach Anspruch 7, wobei die Steuereinrichtung (110) weiter eingerichtet ist, zu bestimmen, ob eine vorbestimmte Zeit abläuft oder nicht, wenn das drahtlose Endgerät in einem Wartemodus ist, einen ersten Datenrahmen zum Messen einer Übertragungsdatenrate des drahtlosen Endgerätes zu einer Basisstation zu übermitteln, wenn die vorbestimmte Zeit abläuft, die Empfangsdatenrate des drahtlosen Endgerätes mittels des zweiten Datenrahmens zu messen, wenn der zweite Datenrahmen an dem drahtlosen Endgerät empfangen wird, und eine gemessene Empfangsdatenrate des drahtlosen Endgerätes und eine Übertragungsdatenrate des drahtlosen Endgerätes, die an der Basisstation gemessen wird und in dem zweiten Datenrahmen gespeichert wird, durch das Anzeigenmodul (160) anzuzeigen.

11. Vorrichtung nach Anspruch 10, wobei die Basisstation eingerichtet ist, die Übertragungsdatenrate des drahtlosen Endgerätes zu messen basierend auf Zeitinformation, die eine Übertragungszeit des ersten Datenrahmens von dem drahtlosen Endgerät repräsentiert, und typischen Daten, die zwischen dem drahtlosen Endgerät und der Basisstation zugewiesen werden, die in dem ersten Datenrahmen gespeichert sind.

12. Vorrichtung nach Anspruch 10, wobei das drahtlose Endgerät eingerichtet ist, die Empfangsdatenrate des drahtlosen Endgerätes zu messen mittels typischer Daten, die zwischen dem drahtlosen Endgerät und der Basisstation zugewiesen werden, und Zeitinformation, die eine Übertragungszeit des zweiten Datenrahmens von der Basisstation repräsentiert, die in dem zweiten Datenrahmen gespeichert sind.

## Revendications

1. Un procédé pour afficher un taux de données d'un terminal sans fil, le procédé comprenant les étapes consistant à:
communiquer un premier cadre de données pour mesurer le taux de données de transmission du terminal sans fil à une station de base (203);
enregistrer l'information du taux de données de transmission mesuré à la station de base dans un deuxième cadre de données (209);
recevoir le deuxième cadre de données pour mesurer un taux de données de réception du terminal sans fil de la station de base (210); et
afficher le taux de données de transmission et le taux de données de réception du terminal sans fil (208).

2. Le procédé de la revendication 1, dans lequel le premier cadre de données inclut un premier champ (410) ayant une information d'attribut de données communiquées par le terminal sans fil, un deuxième champ (411) ayant une information de temps auquel le terminal sans fil transmet le premier cadre de données, un troisième champ (412) ayant des données typiques assignées entre le terminal sans fil et le station de base, un quatrième champ (413) ayant une information des taux de données de transmission et de réception précédents du terminal sans fil, et un cinquième champ (414) ayant une parité pour déterminer si une perte de données communiquées du terminal sans fil existe ou non.

3. Le procédé de la revendication 1, dans lequel le deuxième cadre de données inclut un premier champ (420) ayant une information d'attribut des données communiquées du terminal sans fil, un deuxième champ (421) ayant une information de temps auquel la station de base transmet le deuxième cadre de données, un troisième champ (422) ayant des données typiques assignées entre le terminal sans fil et la station de base, un quatrième champ (423) ayant une information d'un taux de données de transmission du terminal sans fil, mesuré par la station de base, et un cinquième champ (424) ayant une parité pour déterminer si une perte de données communiquées du terminal sans fil existe ou non.

4. Le procédé de la revendication 1, le procédé comprenant en outre les étapes consistant à:
déterminer si un temps prédéterminé expire ou non quand le terminal sans fil est dans un mode d'attente (202);
communiquer le premier cadre de données pour mesurer un taux de données de transmission du terminal sans fil à une station de base si le temps prédéterminé expire (203);
mesurer le taux de données de transmission du terminal sans fil au moyen d'un premier cadre de données quand le premier cadre de données est reçu à la station de base (209);
mesurer le taux de données de réception du terminal sans fil au moyen du deuxième cadre de données (205) quand le deuxième cadre de données est reçu au terminal sans fil (204).

5. Le procédé de la revendication 4, dans lequel la station de base mesure le taux de données de transmission du terminal sans fil basé sur une information de temps lequel représente un temps de transmission du premier champ de données du terminal sans fil et des données typiques assignées entre le terminal sans fil et la station de base, lesquels sont enregistrés dans le premier cadre de données.

6. Le procédé de la revendication 4, dans lequel le terminal sans fil mesure le taux des données de réception du terminal sans fil au moyen de données typiques assignées entre le terminal sans fil et la station de base, et une information de temps lequel représente un temps de transmission du deuxième cadre de données de la station de base, lesquels sont enregistré dans le deuxième cadre de données.

7. Un dispositif pour afficher un taux de données d'un terminal sans fil, le dispositif comprenant:
un module de radiofréquence (123) adapté à recevoir et transmettre des signaux de radiofréquence;
un module de traitement de données (120) adapté à moduler et démoduler des signaux;
une mémoire (130) adaptée à enregistrer des programmes pour exécuter des fonctions sans fil du terminal sans fil;
un module d'affichage (160) adapté à afficher une intensité de signal, une information de taux de données de transmission et une information de taux de données de réception du terminal sans fil;
un contrôleur (110) adapté à communiquer un premier cadre de données pour mesurer un taux de données de transmission du terminal sans fil à une station de base, recevoir un deuxième cadre de données pour mesurer un taux de données de réception du terminal sans fil incluant une information du taux de données de transmission mesuré à la station de base de la station de base, et afficher le taux de données de transmission et le taux de données de réception du terminal sans fil sur le module d'affichage (160).

8. Le dispositif de la revendication 7, dans lequel le premier cadre de données inclut un premier champ (410) ayant une information d'attribut de données communiquées par le terminal sans fil, un deuxième champ (411) ayant une information de temps auquel le terminal sans fil transmet le premier cadre de données, un troisième champ (412) ayant des données typiques assignées entre le terminal sans fil et le station de base, un quatrième champ (413) ayant une information des taux de données de transmission et de réception précédents du terminal sans fil, et un cinquième champ (414) ayant une parité pour déterminer si une perte de données communiquées du terminal sans fil existe ou non.

9. Le dispositif de la revendication 7, dans lequel le deuxième cadre de données inclut un premier champ (420) ayant une information d'attribut des données communiquées du terminal sans fil, un deuxième champ (421) ayant une information de temps auquel la station de base transmet le deuxième cadre de données, un troisième champ (422) ayant des données typiques assignées entre le terminal sans fil et la station de base, un quatrième champ (423) ayant une information d'un taux de données de transmission du terminal sans fil, mesuré par la station de base, et un cinquième champ (424) ayant une parité pour déterminer si une perte de données communiquées du terminal sans fil existe ou non.

10. Le dispositif de la revendication 7, dans lequel le contrôleur (110) est adapté en outre à déterminer si un temps prédéterminé expire ou non quand le terminal sans fil est dans un mode d'attente, communiquer un premier cadre de données pour mesurer un taux de données de transmission du terminal sans fil à une station de base si le temps prédéterminé expire, mesurer le taux de données de réception du terminal sans fil au moyen du deuxième cadre de données quand le deuxième cadre de données est reçu au terminal sans fil, et afficher un taux de données de réception mesuré du terminal sans fil et le taux de données de transmission du terminal sans fil mesuré à la station de base et enregistré dans le deuxième cadre de données par le module d'affichage (160).

11. Le dispositif de la revendication 10, dans lequel la station de base est adapté à mesurer le taux de données de transmission du terminal sans fil basé sur une information de temps lequel représente un temps de transmission du premier champ de données du terminal sans fil et des données typiques assignées entre le terminal sans fil et la station de base, lesquels sont enregistrés dans le premier cadre de données.

12. Le dispositif de la revendication 10, dans lequel le terminal sans fil est adapté à mesurer le taux des données de réception du terminal sans fil au moyen de données typiques assignées entre le terminal sans fil et la station de base, et une information de temps lequel représente un temps de transmission du deuxième cadre de données de la station de base, lesquels sont enregistré dans le deuxième cadre de données.
